# EUROPEAN PATENT SPECIFICATION

(11) **EP 3 711 151 B1**
(45) Date of publication and mention of the grant of the patent: **03.01.2024**
(21) Application number: 17803852.7
(22) Date of filing: 13.11.2017
(51) Int. Cl.: H02K 29/03

(54) **SINGLE-PHASE ELECTRONICALLY COMMUTATED MOTOR**
EINPHASIGER ELEKTRONISCH KOMMUTIERTER MOTOR
MOTEUR MONOPHASÉ À COMMUTATION ÉLECTRONIQUE

(43) Date of publication of application: 23.09.2020
(73) Proprietor: Pierburg Pump Technology GmbH, 41460 Neuss (DE)
(72) Inventor: HENKE, Toni, 09430 Drebach (DE); PATZNER, Rene, 41460 Neuss (DE)
(74) Representative: terpatent Patentanwälte ter Smitten Eberlein-Van Hoof Rütten Daubert
(86) International application number: PCT/EP2017/079073
(87) International publication number: WO 2019/091585

(56) References cited:
- JP-A- 2007 060 800
- US-A1- 2004 189 136
- US-A1- 2006 197 478
- US-A1- 2014 084 741

## Description

The invention is directed to a single-phase electronically commutated motor with a rotor and with a laminated stator body.

These electric motors are provided with a stator body comprising at least one set of ferromagnetic lamination sheets. Laminated stator bodies allow to avoid, or at least to suppress, eddy currents reducing the motor efficiency. The lamination sheets of the laminated stator body are stacked in the axial motor direction and are positively connected to each other by axial punch protrusions, meaning that the lamination sheets of a set are provided with identical and meshing punch protrusions, to ensure an exact radial alignment of the lamination sheets to each other. The result of the punching process is a mechanical deformation of the lamination sheet and in particular of the metal microstructure so that the magnetic conductivity of the lamination sheet is changed within the punch protrusion area. Single-phase electric motors are provided with a plurality of stator coils electrically connected in series. The stator coils are energized simultaneously with an alternating energizing voltage to drive a permanently magnetized motor rotor. Since all stator coils are energized simultaneously, reliably starting the motor rotor in a defined rotational direction requires special hardware measures. Some single-phase electric motors are provided with asymmetrically shaped stator poles, for example with pole teeth with an asymmetrically shaped rotor-facing pole shoe edge, to achieve a preferred rotational start direction of the motor rotor. Such a single-phase electric motor is, for example, disclosed in US 2006/0197478 A1.

JP2007060800 A discloses a motor with an asymmetrical rotor-facing pole shoe edge.

However, the asymmetric shape of the rotor-facing pole shoe edge results in a not-equidistant air gap with respect to a circumferential direction of the motor rotor and, as a result, in a larger average air gap between the motor stator and the motor rotor. The large average air gap directly reduces the efficiency of the electric motor.

It is an object of the invention to provide a single-phase electronically commutated motor which allows defining the rotational start direction of the motor rotor without significantly reducing the motor efficiency.

This object is achieved with a single-phase electronically commutated motor with the features of claim 1.

The single-phase electronically commutated motor according to the invention is provided with a rotor and with a laminated stator body comprising at least one set of ferromagnetic lamination sheets positively connected to each other by axial punch protrusions. The laminated stator body allows avoiding, or at least significantly suppressing, eddy currents within the stator. The ferromagnetic lamination sheets within a lamination sheet set are positively connected in axial direction to avoid a shifting of the lamination sheets and, as a result, to ensure a defined tangential and radial alignment of the lamination sheets of a lamination sheet set.

According to the invention, the lamination sheet set defines a plurality of pole teeth with a pole shoe at each pole tooth. Each pole tooth is provided with a stator coil, wherein adjacent pole teeth are coiled in opposite directions to achieve opposite polarizations of the energized stator coils. The rotor-facing pole shoe edge is shaped asymmetrically with respect to the radial centerline of the pole tooth. As a result, the rotor-facing pole shoe edge defines a non-constant air gap between the motor stator and the motor rotor with respect to a circumferential direction of the motor rotor generating a not-homogeneous magnet field, in particular during the high-energy startup of the motor. The asymmetric rotor-facing pole shoe edge ensures an initial torque and defines a preferred rotational start direction of the motor rotor.

According to the invention, for each stator pole tooth one axial punch protrusion of the axial punch protrusions which positively connect the lamination sheets within a lamination sheet set is arranged radially close to the rotor-facing pole shoe edge so that the distance between the punch protrusion edge and the pole shoe edge is less than the distance between the punch protrusion edge and any other lamination sheet edge. The punch process mechanically deforms the lamination sheet, so that the microstructure and, as a result, the magnetic conductivity of the lamination sheet is changed within the punch protrusion and in its direct vicinity. According to the invention, the punch protrusion is radially arranged close to the rotor-facing edge of the pole shoe of a pole tooth. The relatively high magnetic resistance of the punch protrusion enhances the asymmetry of the stator magnetic field caused by the asymmetric pole shoe geometry. This allows using less asymmetric pole shoe geometries for defining and assuring the preferred rotational motor rotor start direction. As a result, the average air gap between the motor stator and the motor rotor can be reduced and the motor efficiency can be improved.

Preferably, the pole tooth punch protrusion is arranged at the radial pole tooth centerline to avoid unintended and, in particular, asymmetric mechanical deformations of the pole tooth during the punch process.

In an preferred embodiment, the ratio of the distance between the punch protrusion edge and the rotor-facing pole shoe edge to the distance between the punch protrusion edge and the closest other lamination sheet edge is in a range of 0.3 to 0.8, preferably in a range of 0.5 to 0.65. This allows effectively enhancing the asymmetry of the stator magnetic field without risking unintended mechanical deformations of the rotor-facing pole shoe edge caused by the punching.

In a preferred embodiment, the pole shoe back edges of both pole shoe arms have approximately the same radius to improve the mechanical stability of the pole shoe and, as a result, of the entire pole tooth.

Preferably, the distance between the punch protrusion edge and the rotor-facing pole shoe edge is less than the distance between the pole shoe back edge and the rotor-facing pole shoe edge. For this punch protrusion position, the enhancement of the stator magnet field asymmetry is very effective.

In a preferred embodiment, the laminated stator body is provided with a lamination sheet set forming a magnetic back iron ring, wherein each magnetic back iron ring lamination sheet is positively connected to the rotor-remote end of at least one pole tooth lamination sheet. The magnetic back iron ring improves the motor efficiency.

In another preferred embodiment, at least two ferromagnetic pole tooth lamination sheet sets are positively connected in tangential direction by a non-magnetic connection body. The non-magnetic connection body, preferably made of plastic e.g. by injection molding, holds the pole tooth lamination sheet sets of the stator body at a defined radial and tangential position without significantly affecting the stator magnetic field.

Preferably, the laminated stator body surrounds the motor rotor so that the motor rotor rotates inside of the laminated stator body. This allows a particularly compact motor design.

An embodiment of the invention is described with reference to the accompanying drawings, wherein
figure 1 shows a schematic longitudinal section of a single-phase electronically commutated motor according to the invention,
figure 2 shows a radial cross section of a laminated stator body of the motor of figure 1, and
figure 3 shows a pole tooth with a pole shoe and a part of a back iron ring of the motor of figure 1.

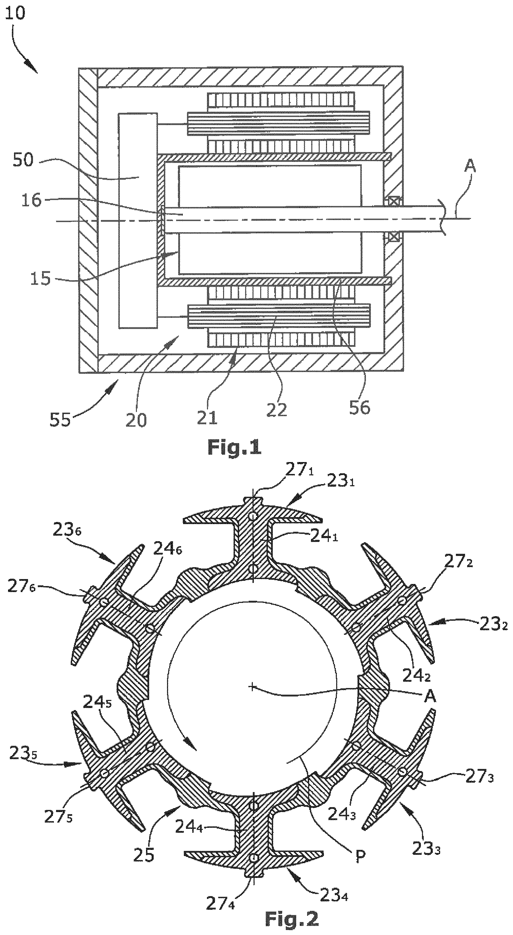

Figure 1 shows a single-phase electronically commutated motor 10 provided with a permanently magnetized motor rotor 15 co-rotatably attached to a motor shaft 16. The motor 10 is also provided with a motor stator 20 comprising a laminated stator body 21 and stator coils 22. The motor 10 comprises a motor control unit 50 electrically connected to the stator coils 22 for energizing the stator coils 22. The motor 10 also comprises a motor housing 55 and a motor can 56.

The motor 10 is provided as a so-called canned motor, wherein the motor can 56 fluidically separates the motor rotor 15 from the motor stator 20. The motor rotor 15 is arranged within the motor can 56, and the surrounding motor stator 20 is arranged outside of the motor can 56. The motor rotor 15 is rotatable around an axis of rotation A and is non-rotatably attached to the motor shaft 16.

Figure 2 shows a radial cross section of the laminated stator body 21. The stator body 21 comprises six pole tooth lamination sheet sets 23₁-23₆ defining six pole teeth 24₁-24₆, which are arranged equidistantly circular around the axis of rotation A. Each of the pole teeth 24₁-24₆ is provided with a stator coil 22. The six pole tooth lamination sheet sets 23₁-23₆ are held by a non-magnetic lamination sheet holding unit 25 to define an exact radial and tangential alignment of the pole teeth 24₁-24₆ of the stator body 21. The lamination sheet holding unit 25 is preferably made of plastic, for example by injection molding. Since the lamination sheet holding unit 25 is non-magnetic, the stator magnetic field is not significantly affected by the lamination sheet holding unit 25, in particular the lamination sheet holding unit 25 does not provide a magnetic flux path between the pole teeth 24₁-24₆. The arrow P indicates the preferred rotational direction of the motor rotor 15 and, as a result, of the motor shaft 16.

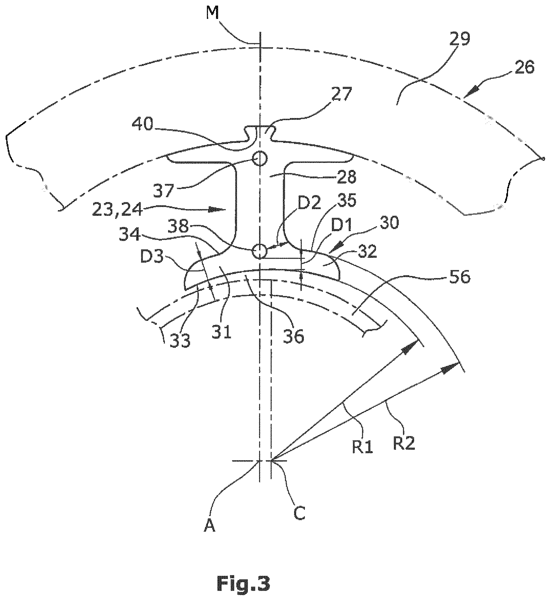

Figure 3 shows a ferromagnetic pole tooth lamination sheet 28 of a pole tooth lamination sheet set 23 and shows a section of a ferromagnetic back iron ring sheet 29 of a magnetic back iron ring 26. The back iron ring 26 is provided with connection recesses 40 and magnetically connects the rotor-remote distal ends of all pole teeth 24 of the stator body 21. The back iron ring 26 can be shifted in axial motor direction over the pole teeth 24, in particular shifted parallel to the axis of rotation A, so that the back iron connection noses 27 of the pole tooth lamination sheets 28 mesh with the corresponding pole tooth connection recesses 40 of the back iron ring sheet 29.

The pole tooth 24, defined by the pole tooth lamination sheet set 23, is provided with a pole shoe 30 comprising two tangential pole shoe arms 31,32 with the pole shoe back edges 34,35. The pole shoe 30 is provided with an asymmetrically shaped rotor-facing proximal pole shoe edge 33. The rotor-facing pole shoe edge 33 is provided as a segment of a circle with a radius R1 and with a circle center C. The pole shoe back edges 34,35 are provided as segments of a circle with a radius R2 and with the circle center C. The circle center C is located in a distance to the radial pole tooth centerline M, preferably in a distance of at least several tenth of a millimeter. As a result, the rotor-facing pole shoe edge 33 is shaped asymmetrically with respect to the radial centerline M causing a non-equidistant stator gap 36 between the pole shoe 30 of the motor stator 20 and the motor can 56 surrounding the motor rotor 15. The asymmetrically shaped pole shoes 30 define an asymmetric "air gap" between the motor stator 20 and the motor rotor 15 to ensure starting and driving the permanently magnetized motor rotor 15 with a preferred rotational direction P.

Every pole tooth lamination sheet 28 is provided with two axial punch protrusions 37,38 located at the pole tooth centerline M. Preferably, the punch protrusions are circular and have a nominal diameter of about 1 mm. The first punch protrusion 37 is arranged at the rotor-remote distal end of the pole tooth lamination sheet 28 and the second punch protrusion 38 is arranged at the rotor-facing proximal end of the pole tooth lamination sheet 28. The punch protrusion 38 is arranged in a distance D1 to the rotor-facing pole shoe edge 33 which is less than the distance D2 to the closest other pole tooth lamination sheet edge 39 and is also less than the distance D3 between the rotor-facing pole shoe edge 33 and the pole shoe back edges 34,35. Preferably, the distance D1 is within a range of 2.5% to 3.5% of the motor rotor diameter which for the motor 10 corresponds with a range of about 0.7 mm to 0.8 mm.

The mechanical deformation of the pole tooth lamination sheet 28 during the punch process causes an increase of the magnetic resistance in the punch protrusion 38 area. The magnetic punch protrusion resistance affects the magnetic flux within the pole tooth lamination sheet 28, in particular within the pole shoe 30. As a result, the asymmetry of the stator magnetic field caused by the asymmetric rotor-facing pole shoe edge 33 is dramatically enhanced. This allows using a less asymmetric design of the pole shoe edge 33, so that the circle center C can be located close to the pole tooth centerline M. As a result, the average thickness of the stator gap 36 can be reduced to improve the motor efficiency.

In the manufacturing process of the motor stator 20, first, all pole tooth lamination sheets 28 of a pole tooth lamination sheet set 23 as well as all back iron ring sheets 29 of the back iron ring 26 are put together and axially fixed. Subsequently, the six pole tooth lamination sheet sets 23₁-23₆ of the stator body 21 are positioned in the lamination sheet holding unit 25 by injection molding to thereby define the radial and tangential positions of the pole teeth 24₁-24₆. Each pole tooth 24₁-24₆, defined by a pole tooth lamination sheet set 23₁-23₆, is coiled from radially outwardly to define the six stator coils 22, wherein adjacent pole teeth 24₁-24₆ are coiled in opposite direction. The stator coils 22₁-22₆ are electrically connected in series.

Finally, the back iron ring 26 is shifted in axial direction onto the pole tooth lamination sheet sets 23₁-23₆ so that the pole tooth connection recesses 40 of the back iron ring 26 mesh with the back iron connection noses 27₁-27₆ of the pole tooth lamination sheet sets 23₁-23₆.

### Reference list

- 10: single-phase electronically commutated motor
- 15: motor rotor
- 16: motor shaft
- 20: motor stator
- 21: stator body
- 22: stator coil
- 23₁-23₆: pole tooth lamination sheet sets
- 24₁-24₆: pole teeth
- 25: lamination sheet holding unit
- 26: back iron ring
- 27₁-27₆: back iron connection noses
- 28: pole tooth lamination sheet
- 29: back iron ring sheet
- 30: pole shoe
- 31: pole shoe arm
- 32: pole shoe arm
- 33: rotor-facing pole shoe edge
- 34: pole shoe back edge
- 35: pole shoe back edge
- 36: stator gap
- 37: punch protrusion
- 38: punch protrusion
- 39: pole tooth lamination sheet edge
- 40: pole tooth connection recesses
- 50: motor control unit
- 55: motor housing
- 56: motor can
- A: axis of rotation
- C: circle center
- D1: distance between the punch protrusion and the rotor facing pole shoe edge
- D2: distance between the punch protrusion and the closest other pole tooth lamination sheet edge
- D3: distance between the rotor-facing pole shoe edge and the pole shoe back edge
- M: pole tooth centerline
- P: preferred rotational direction

## Claims

1. A single-phase electronically commutated motor (10) with a motor rotor (15) and with a laminated stator body (21) comprising at least one set (23₁-23₆) of ferromagnetic lamination sheets (28) positively connected to each other by axial punch protrusions (37,38)
wherein the lamination sheet set (23₁-23₆) defines a plurality of pole teeth (24₁-24₆) with pole shoes (30), the pole teeth (24₁-24₆) being provided with a plurality of stator coils (22),
wherein the rotor-facing pole shoe edge (33) is shaped asymmetrically with respect to a radial pole tooth centerline (M), so that the rotor-facing pole shoe edge (33) defines a non-constant air gap (36) between the stator pole shoe (30) and the motor rotor (15) with respect to a circumferential direction of the motor rotor (15),
wherein for each stator pole tooth (24₁-24₆) one axial punch protrusion (38) of the axial punch protrusions (37,38) is radially arranged close to the rotor-facing pole shoe edge (33) so that the distance between the punch protrusion edge and the rotor-facing pole shoe edge (D1) is less than the distance between the punch protrusion edge and any other lamination sheet edge (D2).

2. The single phase electronically commutated motor (10) according to claim 1, wherein the pole tooth punch protrusion (38) is arranged at the radial pole tooth centerline (M).

3. The single phase electronically commutated motor (10) according to any preceding claim, wherein ratio of the distance between the punch protrusion edge and the rotor-facing pole shoe edge (D1) to the distance between the punch protrusion edge and the closest other lamination sheet edge (D2) is in a range of 0.3 to 0.8, preferably in a range of 0.5 to 0.65.

4. The single phase electronically commutated motor (10) according to any preceding claim, wherein the pole shoe back edges (34,35) of both pole shoe arms (31,32) have approximately the same radius (R2).

5. The single phase electronically commutated motor (10) according to claim 4, wherein the distance between the punch protrusion edge and the rotor-facing pole shoe edge (D1) is less than the distance between the pole shoe back edge and the rotor-facing pole shoe edge (D3).

6. The single phase electronically commutated motor (10) according to any preceding claim, wherein the laminated stator body (21) is provided with a lamination sheet set forming a magnetic back iron ring (26), wherein each magnetic back iron ring lamination sheet (29) is positively connected to the rotor-remote end of at least one pole tooth lamination sheet (28).

7. The single phase electronically commutated motor (10) according to any preceding claim, wherein at least two ferromagnetic pole tooth lamination sheet sets (23₁-23₆) are positively connected in tangential direction by a non-magnetic connection body (25).

8. The single phase electronically commutated motor (10) according to any preceding claim, wherein the laminated stator body (21) surrounds the motor rotor (15).

## Patentansprüche

1. Einphasiger elektronisch kommutierter Motor (10) mit einem Motorrotor (15) und mit einem geblechten Statorkörper (21), der mindestens einen Satz (23₁-23₆) von ferromagnetischen Blechen (28) umfasst, die durch axiale Stanzvorsprünge (37,38) formschlüssig miteinander verbunden sind
wobei der Blechsatz (23₁-23₆) eine Vielzahl von Polzähnen (24₁-24₆) mit Polschuhen (30) bildet, wobei die Polzähne (24₁-24₆) mit einer Vielzahl von Statorspulen (22) versehen sind,
wobei die dem Rotor zugewandte Polschuhkante (33) asymmetrisch bezogen auf eine radiale Polzahnmittellinie (M) geformt ist, sodass die dem Rotor zugewandte Polschuhkante (33) einen bezogen auf eine Umfangsrichtung des Motorrotors (15) inkonstanten Luftspalt (36) zwischen dem Statorpolschuh (30) und dem Motorrotor (15) bildet,
wobei
für jeden Statorpolzahn (24₁-24₆) ein axialer Stanzvorsprung (38) der axialen Stanzvorsprünge (37,38) radial nahe der dem Rotor zugewandten Polschuhkante (33) angeordnet ist, sodass der Abstand zwischen der Stanzvorsprungskante und der dem Rotor zugewandten Polschuhkante (D1) geringer ist als der Abstand zwischen der Stanzvorsprungskante und jeder anderen Blechkante (D2).

2. Einphasiger elektronisch kommutierter Motor (10) nach Anspruch 1, wobei der Polzahnstanzvorsprung (38) an der radialen Polzahnmittellinie (M) angeordnet ist.

3. Einphasiger elektronisch kommutierter Motor (10) nach einem der vorhergehenden Ansprüche, wobei das Verhältnis zwischen dem Abstand zwischen der Stanzvorsprungskante und der dem Rotor zugewandten Polschuhkante (D1) und dem Abstand zwischen der Stanzvorsprungskante und der nächstgelegenen anderen Blechkante (D2) in einem Bereich von 0,3 bis 0,8, vorzugsweise in einem Bereich von 0,5 bis 0,65 liegt.

4. Einphasiger elektronisch kommutierter Motor (10) nach einem der vorhergehenden Ansprüche, wobei die Polschuhrückseitenkanten (34,35) beider Polschuharme (31,32) ungefähr den gleichen Radius (R2) haben.

5. Einphasiger elektronisch kommutierter Motor (10) nach Anspruch 4, wobei der Abstand zwischen der Stanzvorsprungkante und der dem Rotor zugewandten Polschuhkante (D1) geringer ist als der Abstand zwischen der Polschuhrückseitenkante und der dem Rotor zugewandten Polschuhkante (D3).

6. Einphasiger elektronisch kommutierter Motor (10) nach einem der vorhergehenden Ansprüche, wobei der geblechte Statorkörper (21) einen Blechsatz aufweist, der einen magnetischen Rückschlussring (26) bildet, wobei jedes Blech (29) des magnetischen Rückschlussrings formschlüssig mit dem rotorfernen Ende mindestens eines Polzahnblechs (28) verbunden ist.

7. Einphasiger elektronisch kommutierter Motor (10) nach einem der vorhergehenden Ansprüche, wobei mindestens zwei ferromagnetische Polzahnblechsätze (231-236) durch einen nichtmagnetischen Verbindungskörper (25) in tangentialer Richtung formschlüssig verbunden sind.

8. Einphasiger elektronisch kommutierter Motor (10) nach einem der vorhergehenden Ansprüche, wobei der geblechte Statorkörper (21) den Motorrotor (15) umgibt.

## Revendications

1. Moteur monophasé à commutation électronique (10) avec un rotor de moteur (15) et avec un corps de stator stratifié (21) comprenant au moins un ensemble (231-236) de tôles ferromagnétiques (28) reliées positivement les unes aux autres par des saillies de poinçonnage axiales (37, 38).
dans lequel l'ensemble de tôles (231-236) définit une pluralité de dents polaires (241-246) avec des sabots polaires (30), les dents polaires (241-246) étant fournies avec une pluralité de bobines de stator (22),
dans lequel le bord du sabot polaire orienté vers le rotor (33) est façonné de manière asymétrique par rapport à une ligne médiane radiale de la dent polaire (M), de sorte que le bord du sabot polaire orienté vers le rotor (33) définit un entrefer non constant (36) entre le sabot polaire du stator (30) et le rotor du moteur (15) par rapport à une direction circonférentielle du rotor du moteur (15),
dans lequel
pour chaque dent polaire du stator (241-246), une saillie de poinçonnage axiale (38) des saillies de poinçonnage axiales (37, 38) est disposée radialement à proximité du bord du sabot polaire orienté vers le rotor (33) de sorte que la distance entre le bord de la saillie de poinçonnage et le bord du sabot polaire orienté vers le rotor (D1) est plus petite que la distance entre le bord de la saillie de poinçonnage et tout autre bord de la feuille de stratification (D2).

2. Moteur monophasé à commutation électronique (10) selon la revendication 1, dans lequel la protubérance de poinçonnage de la dent polaire (38) est arrangée au niveau de la ligne médiane radiale de la dent polaire (M).

3. Moteur monophasé à commutation électronique (10) selon l'une des revendications précédentes, dans lequel le rapport entre la distance entre le bord de la saillie du poinçon et le bord du sabot polaire orienté vers le rotor (D1) et la distance entre le bord de la saillie du poinçon et l'autre bord de feuille de stratification le plus proche (D2) est compris entre 0,3 et 0,8, préférablement dans une zone allant de 0,5 à 0,65.

4. Moteur monophasé à commutation électronique (10) selon l'une des revendications précédentes, dans lequel les bords arrière des sabots polaires (34, 35) des deux bras des sabots polaires (31, 32) ont approximativement le même radius (R2).

5. Moteur monophasé à commutation électronique (10) selon la revendication 4, dans lequel la distance entre le bord de la saillie du poinçon et le bord du sabot polaire face au rotor (D1) est plus petite que la distance entre le bord arrière du sabot polaire et le bord du sabot polaire face au rotor (D3).

6. Moteur monophasé à commutation électronique (10) selon l'une des revendications précédentes, dans lequel le corps de stator stratifié (21) est fourni avec un ensemble de tôles formant un anneau de fer arrière magnétique (26), dans lequel chaque tôle de l'anneau de fer arrière magnétique (29) est positivement connectée à l'extrémité distante du rotor d'au moins une tôle de la dent polaire.

7. Moteur monophasé à commutation électronique (10) selon l'une des revendications précédentes, dans lequel au moins deux ensembles de tôles à dents polaires ferromagnétiques (231-236) sont reliés positivement dans la direction tangentielle par un corps de connexion non magnétique (25).

8. Moteur monophasé à commutation électronique (10) selon l'une des revendications précédentes, dans lequel le corps de stator stratifié (21) entoure le rotor du moteur (15).
